# EUROPÄISCHE PATENTSCHRIFT

(11) **EP 2 308 637 B1**
(45) Veröffentlichungstag und Bekanntmachung des Hinweises auf die Patenterteilung: **09.09.2015**
(21) Anmeldenummer: 10013365.1
(22) Anmeldetag: 06.10.2010
(51) Int. Cl.: B23Q 3/155

(54) **Werkzeug-Kettenmagazin**
Tool magazine of the endless chain type
Magasin à outils du type à chaîne sans fin

(30) Priorität: 07.10.2009 DE 102009048343
(43) Veröffentlichungstag der Anmeldung: 13.04.2011
(73) Patentinhaber: Deckel Maho Seebach GmbH, 99846 Seebach (DE)
(72) Erfinder: Tüllmann, Udo, Dr.-Ing., 99817 Eisenach (DE); Kümmel, Stephan, Dipl.-Ing., 06463 Falkenstein/Harz (OT Ermsleben) (DE); Kretzschmar, Andreas, Dipl.-Ing., 02733 Cunewalde (DE)
(74) Vertreter: Beetz & Partner mbB

(56) Entgegenhaltungen:
- DE-A1- 3 313 140
- DE-U1- 8 701 368
- JP-A- S6 171 938
- JP-A- 57 127 642
- JP-A- 2002 273 633
- US-A- 4 699 276

## Beschreibung

Die Erfindung betrifft ein Werkzeug-Kettenmagazin nach dem Oberbegriff des Patentanspruchs 1.

Derartige Werkzeug-Kettenmagazine für komplexe Fräsmaschinen und Bearbeitungszentren sind in verschiedenen Ausführungen seit längerem bekannt. Sie bestehen grundsätzlich aus einer stabilen Tragkonstruktion, die an einer geeigneten Stelle des Maschinengestells montiert oder als gesonderte Baueinheit neben dem Maschinengestell positioniert sein kann. Je nach Größe und Auslegung des Kettenmagazins sind in dieser Tragkonstruktion ein Antriebskettenrad sowie ein oder mehrere Umlenk-Kettenräder angeordnet, wobei das Antriebskettenrad mit einem Motor als Drehantrieb verbunden ist. Um die Kettenräder ist eine Endlos-Gliederkette geführt, deren Kettenglieder durch geeignete Gelenke verschwenkbar miteinander verbunden sind. Jedes Gelenk enthält einen Halter für ein Werkzeug. Bei herkömmlichen Kettenmagazinen sind diese Halter in der Regel zangenartig ausgebildet, wobei zum Einsetzen und Herausnehmen der jeweiligen Werkzeuge meist federbelastete Mechanismen betätigt werden.

Daneben sind auch bereits Werkzeug-Kettenmagazine bekannt, deren Kettenglieder überwiegend aus Gussstahl od. dgl. bestehen. Jedes Kettenglied der Magazinkette weist einen Formkörper als Aufnahmeköcher für ein Werkzeug auf, dessen Innenraum durch aufwendige spanende Bearbeitung der Außenkontur des aufzunehmenden Werkzeugkegels angepasst ist, sodass ein derartiger Werkzeugkegel in den Köcher genau passend eingesetzt, dort durch Federrastung fixiert und daraus auch entnommen werden kann. Da die köcherartigen Werkzeugaufnahmen jedoch seitlich an den Kettengliedern vorgesehen sind, ergeben sich insbesondere bei schnellen Kettenbewegungen erhebliche Belastungen. Ferner ist die Herstellung derartiger Magazinketten mit einem hohen Arbeits- und Kostenaufwand verbunden, was u.a. durch die notwendige Feinbearbeitung der Kettenglied-Rohlinge verursacht wird.

Aus der DE 87 01 368 U1 ist ein Kettenmagazin für Werkzeugmaschinen bekannt, dessen Kettenglieder köcherartige Zylinderbuchsen zur Aufnahme je eines Werkzeugschaftes und an den Endbereichen dieser Zylinderbuchsen befestigte Laschenpaare aufweisen. Diese Laschenpaare bilden zusammen mit Gelenkbolzen die in der Längsachse der Magazinkette liegenden Verbindungsgelenke. Zur Halterung eines Werkzeugschaftes weist jede Zylinderbuchse an ihrem einen Ende einen innen konischen Kegeleinsatz auf, an dessen Innenfläche der entsprechend konische Teil des Werkzeugschaftes großflächig abgestützt ist. Bei Zerstörung seiner Kegeloberfläche kann der Kegeleinsatz auf einfache Weise ausgewechselt werden, ohne dass das Kettenglied demontiert werden müsste.

US-4,699,276 offenbart ein Kettenmagazin nach dem Oberbegriff des Anspruchs 1.

Schließlich sind aus der DE 33 13 140 A Magazinketten für Kettenmagazine von Werkzeugmaschinen in mehreren Ausführungen bekannt. Die in den Fig. 5 und 6 dieser Druckschrift dargestellten Ausführungen bestehen aus einer Reihe von Kettengliedern, die über Laschengelenke gegeneinander zu beiden Seiten hin gelenkig miteinander verbunden sind. Jedes Kettenglied enthält einen kurzen hohlzylindrischen Werkzeug-Halteteil und einen davon beabstandeten Zugbolzen-Halteteil. Der köcherartige Werkzeug-Halteteil weist eine zentrale, innen konische Bohrung zur Aufnahme eines Werkzeugschafts auf. Der gesondert ausgeführte Zugbolzen-Halteteil dient zur Halterung eines Endes des eingesetzten Werkzeugs. Der Werkzeug-Halteteil und der Zugbolzen-Halteteil sind getrennt in einem Paar von mit Zwischenabstand gegenüberliegend angeordneten Gliedlaschen aus vorzugsweise Stahlblech befestigt. Die vorderen Endteile der beiden Gliedlaschen eines Laschenpaares sind mit den hinteren Endteilen der beiden Gliedlaschen des anderen Laschenpaares durch je einen Stegbolzen gelenkig miteinander verbunden und bilden insgesamt die in der zentralen Längsachse der Magazinkette angeordneten Verbindungsgelenke. Aufgrund der Vielzahl der verwendeten Einzelteile, d.h. der jeweils mehrfach benötigten Laschenpaare, der an diesen Laschen montierten Halteteile und der Gelenkbolzen, ergibt sich ein relativ hoher Herstellungsaufwand und eine begrenzte Lebensdauer.

Aufgabe der Erfindung ist es, ein Werkzeug-Kettenmagazin insbesondere für programmgesteuerte Fräsmaschinen und Bearbeitungszentren zu schaffen, das auch bei hohen Beschleunigungen und Geschwindigkeiten beherrschbaren Belastungen ausgesetzt ist und mit hoher ökonomischer Effizienz kostengünstig hergestellt und betrieben werden kann.

Diese Aufgabe wird bei einem Werkzeug-Kettenmagazin insbesondere für programmgesteuerte Fräsmaschinen und Bearbeitungszentren erfindungsgemäß durch die Merkmale des Patentanspruchs 1 gelöst.

Die Kettenglieder sind jeweils als einteilige Formkörper aus einem formstabilen und verschleißfesten Material, insbesondere einem Leichtmetall oder einem ggf. faserverstärkten Kunststoff ausgebildet. Dadurch ergeben sich herstellungstechnische Vorzüge, weil die Formkörper durch geeignete Gieß- oder Spritztechniken ohne spanende Bearbeitung hergestellt werden können. Daneben führt die Verwendung von Leichtmetall oder hochfesten Kunststoffen als Material für die Kettenglieder zu geringen Gewichten der Magazinketten, was eine entsprechende Auslegung der Tragkonstruktion und der motorischen Antriebsaggregate ermöglicht. Neben den günstigen Herstellungskosten durch Wegfall von komplizierten Bearbeitungsvorgängen der Kettenglieder ergeben sich daher längere Betriebszeiten aufgrund der durch die geringeren Gesamtgewichte verminderten Beschleunigungs- und Verzögerungsbelastungen. Ein besonderes Merkmal der Erfindung besteht noch darin, dass an den Aufnahmeköchern keine spanenden Nachbearbeitungen vorgenommen werden müssen, wodurch sich eine vereinfachte Herstellung und eine besonders günstige Kostensituation ergibt. Vorteilhaft ist die Möglichkeit der Verwendung hochfester Kunststoffe, was zu verminderten Gewichten und Betriebsgeräuschen des erfindungsgemäßen Kettenmagazins führt.

Um auch nach längeren Betriebszeiten einen gleichmäßigen Angriff der Antriebs-Kettenräder und auch der Umlenk-Kettenräder an den einzelnen Kettengliedern zu gewährleisten, ist bei einem bevorzugten Ausführungsbeispiel gemäß einer weiteren vorteilhaften Ausgestaltung der Erfindung jedes Kettenglied mit einem verstärkten Umfangsteil von größerem Durchmesser versehen, an welchem die jeweiligen Kettenräder angreifen. Dieser verstärkte Umfangsteil besteht zweckmäßig aus dem gleichen Material wie der Grundkörper des Kettengliedes, d.h. aus Leichtmetallguss oder hochfestem Kunststoff, und kann in Form von mehreren axial übereinander an der Außenseite des Grundkörpers ausgeformten schmalen Ringsegmenten ausgebildet sein. Es ist jedoch auch möglich, den verstärkten Umfangsteil des Kettengliedes, an welchem die Kettenräder angreifen, aus einem besonders stabilen und verschleißfesten Material herzustellen.

Für ein verwindungsresistentes Betriebsverhalten der Magazinkette und ihrer Kettenglieder ist eine zweiseitige symmetrische Abstützung jedes Kettengliedes von wesentlicher Bedeutung. Zur Erzielung einer betriebssicheren verwindungsresistenten Abstützung und Führung weist bei einem vorteilhaften Ausführungsbeispiel des erfindungsgemäßen Kettenmagazins jedes Kettenglied zwei seitlich diametral angeordnete Führungs- und Tragrollen auf, die in zwei zueinander parallelen Führungs- und Tragschienen der Tragkonstruktion laufen. Diese Führungs- und Tragrollen sind auf zwei Hohlzapfen fixiert und gelagert, die an dem Grundkörper des jeweiligen Kettengliedes seitlich nach außen weisend angeformt sind. Die zentrale Anordnung des Aufnahmeköchers im Grundkörper des Kettengliedes und die Abstützung des Kettengliedes auf den beiden außenseitigen Laufrollen ergeben wiederum günstige symmetrische Verhältnisse.

Die gelenkige Verbindung der aufeinanderfolgenden Kettenglieder zur Magazinkette erfolgt durch Gelenkbolzen, die Schwenkbewegungen nach beiden Seiten hin ermöglichen, sodass "Gegenbiegungen" der Magazinkette mit relativ engen Radien möglich sind, wodurch der Platzbedarf des Kettenmagazins zur Aufnahme größerer Werkzeugmengen reduziert werden kann. An den vorstehenden Endteilen der Gelenkbolzen sind zweckmäßig Führungsrollen zur Seitenführung der Magazinkette gelagert, die in entsprechenden Führungsschienen der Tragkonstruktion laufen.

Damit die Magazinkette die hohen Beschleunigungs- und Verzögerungskräfte auch nach längeren Betriebszeiten schadlos aushalten kann, sind die besonders hoch beanspruchten Verbindungsgelenke zwischen den aufeinanderfolgenden Kettengliedern formsteif und stabil ausgebildet. Zu diesem Zweck sind bei einem bevorzugten Ausführungsbeispiel an einer Seite jedes Kettenglieds in der vertikalen Mittelebene zwei vertikal langgestreckte Gelenkaugen mit Zwischenabstand angeformt und an der diametral gegenüberliegenden anderen Seite des Kettengliedes ist ein ebenfalls langgestrecktes mittleres Gelenkauge angeformt, dessen Länge geringfügig kleiner als der axiale Abstand zwischen den beiden Gelenkaugen der ersten Seite ist, sodass dieses mittlere Gelenkauge zwischen die beiden Gelenkaugen des anderen Kettengliedes mit Spiel passt und der Verbindungsbolzen durch alle drei Gelenkaugen hindurchgeschoben und gesichert werden kann. Da das mittlere Gelenkauge erhöhten Belastungen ausgesetzt ist, sind in seinen Innenraum zweckmäßigerweise kurze Lagerbuchsen eingesetzt. Um eine zweckmäßige Verteilung der im Betrieb auf die Gelenke einwirkenden Zugkräfte über die Gelenkbolzen in die einzelnen Kettenglieder zu erhalten, ist es zweckmäßig, die zylindrischen Wandungen der Gelenkaugen mit sich nach innen allmählich verbreiterndem Übergang in dem Grundkörper des Kettengliedes auszubilden. Die Wandungen der Gelenkaugen können auch an der dem Grundkörper des Kettengliedes zugewandten Innenseite in obere bzw. auch untere Verstärkungsstreben übergehen, die sich in Kettenlaufrichtung erstrecken und die Aufnahme sowie die symmetrische Verteilung der im Betrieb auftretenden Zugkräfte begünstigen.

Um eine sichere Halterung der in den jeweiligen Aufnahmeköcher des Kettenglieds eingesetzten Werkzeugkegel zu gewährleisten, ist im oberen Endteil des Grundkörpers des Kettenglieds eine Klemmung vorgesehen, die bei einem Ausführungsbeispiel in einem einteilig angeformten Hohlzylinder eine Kugel und eine auf diese radial einwirkende Druckfeder aufweist. Die Kugel ist in dem Hohlzylinder längs bewegbar gelagert und wird von der Druckfeder in eine Ringnut am oberen Endteil des Werkzeugkegels gedrückt, um diesen gegen Herausfallen zu sichern. Zur Sicherung der Kugelsperre ist ein Federbügel bzw. eine Federkappe auf dem oberen Endteil des Grundkörpers des Kettengliedes aufgeklemmt.

Gegenstand der Erfindung ist auch eine Magazinkette für ein Kettenmagazin, bei der die Aufnahmeköcher für die Werkzeuge allein durch die Gelenkbolzen der Gelenke zur Magazinkette verbunden sind, und zwar unter Verzicht auf spanende Bearbeitung.

Im Folgenden werden Ausführungsbeispiele der Erfindung anhand der Zeichnung im Einzelnen beschrieben. Es zeigen:
- Fig. 1: einen Teil eines Kettenmagazins in schematischer Draufsicht;
- Fig. 2: einen Teil des Kettenmagazins nach Fig. 1 in perspektivischer Darstellung;
- Fig. 3: zwei aufeinanderfolgende Kettenglieder des Kettenmagazins nach Fig. 2;
- Fig. 4: einen Axialschnitt zweier verschiedener Kettenglieder für eine Magazinkette nach Fig. 1, 2 in einer vertikalen Querebene zur Bewegungsrichtung und
- Fig. 5: die Kettenglieder nach Fig. 4 im Axialschnitt in Längsrichtung des Kettenmagazins.

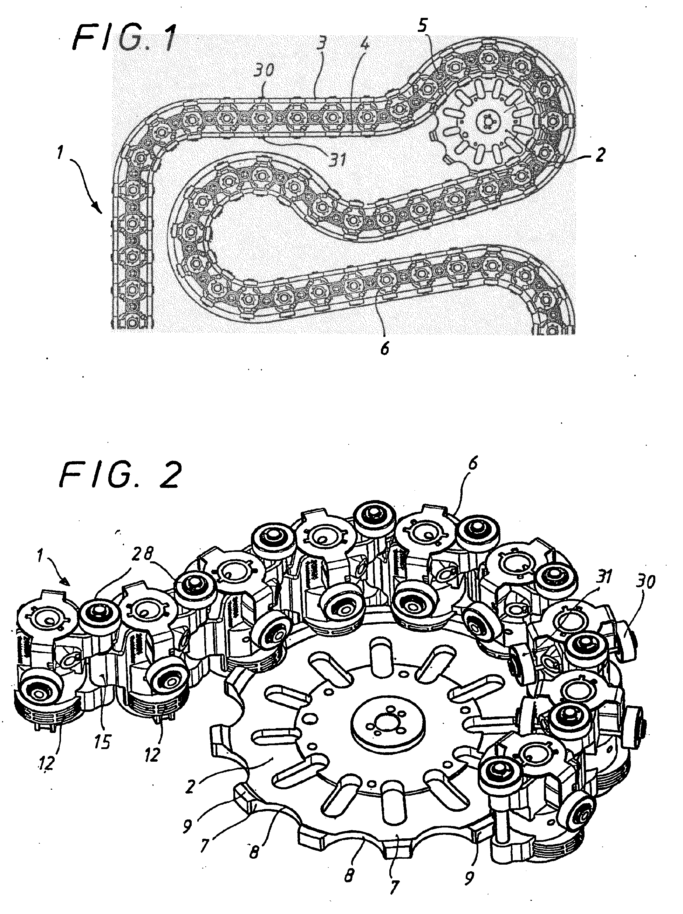

In Fig. 1 ist lediglich ein Teil des erfindungsgemäßen Kettenmagazins in schematischer Draufsicht dargestellt. Eine bei dem vorliegenden Ausführungsbeispiel meanderförmig geführte Magazinkette 1 läuft auf einer - nicht dargestellten - Tragkonstruktion, an der ein Antriebs-Kettenrad 2 sowie - nicht dargestellte - Umlenk-Kettenräder montiert sind. Daneben sind an der Tragkonstruktion zwei seitliche Führungsschienen 3, 4 sowie eine zentrale Führungsschiene 5 als Führungselemente für die Magazinkette 1 vorgesehen. Die Magazinkette 1 besteht aus einer Vielzahl von gelenkig miteinander verbundenen Kettengliedern 6, die aus einem Leichtmetall oder einem formstabilen und verschleißfesten Kunststoff durch geeignete Druckguss- bzw. Spritztechniken hergestellt sind. Wie aus Fig. 2 ersichtlich, weist das Antriebs-Kettenrad 2 an seinem Außenrand zahnartige Ansätze 7 in einer durch die Größe der Kettenglieder 6 vorgegebenen Teilung auf. Diese zahnartigen Ansätze 7 sind in Umfangsrichtung durch kreissegmentförmige Aussparungen 8 voneinander beabstandet und weisen verdickte Endteile 9 auf, die zur Verringerung der Flächenpressung bei Einwirkung auf die entsprechenden Umfangsbereiche der Kettenglieder 6 dienen.

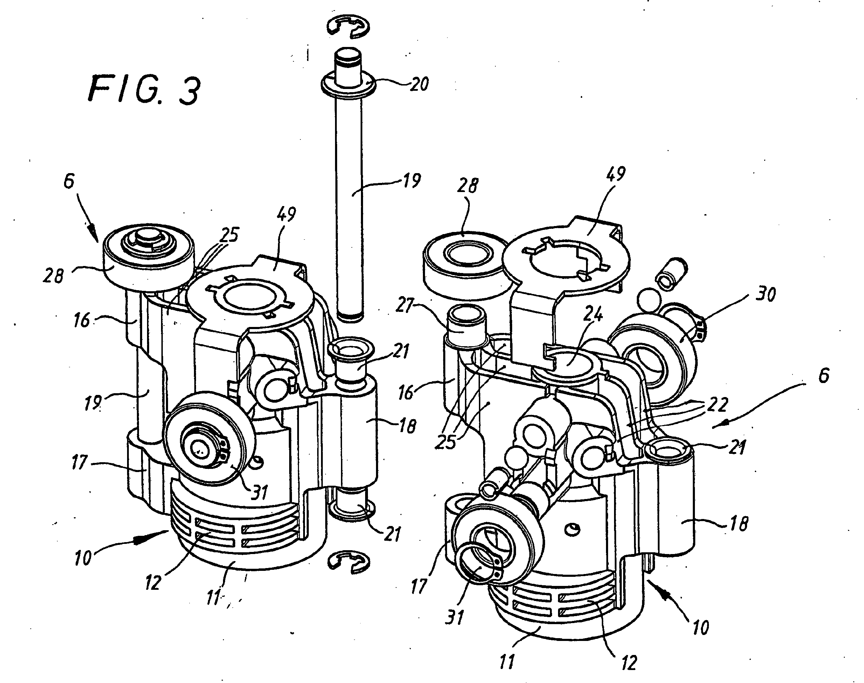

Die in den Figuren 1 und 2 dargestellte Magazinkette ist aus Kettengliedern 6 gelenkig zusammengebaut, von denen zwei Glieder in Fig. 3 in vergrößerter perspektivischer bzw. Explosions-Darstellung gezeigt sind. Jedes Kettenglied 6 wird von einem hier einteiligen Grund- bzw. Formkörper 10 aus Leichtmetall-Druckguss oder formstabilem Kunststoff gebildet und enthält in seinem Inneren einen Aufnahmeköcher für ein Werkzeug. Der Grundkörper 10 hat in seinem unteren Teil 11 eine etwa teilzylindrische Außenkontur. In einem ausgewählten Bereich des unteren Teils 11 des Grundkörpers 10 sind außen Verstärkungsabschnitte 12 angeformt, die bei dem dargestellten Ausführungsbeispiel als miteinander quer verbundene übereinander angeordnete Umfangsrippen bzw. Ringsegmente ausgebildet sind. An diesen Verstärkungsabschnitten 12 greifen die Zähne 7 des Kettenrades 2 bzw. entsprechend ausgebildete Zähne der Umlenk-Kettenräder an. Damit die Magazinkette 1 in der in Fig. 1 dargestellten Weise meanderförmig geführt werden kann, sind an jedem Kettenglied 6 jeweils zwei Versteifungselemente 12 in Form von zwei kreissegmentförmigen Verstärkungsabschnitten diametral gegenüberliegend ausgebildet, wodurch Biegungen ebenso wie Gegenbiegungen des Kettenlaufs ermöglicht werden, da die jeweiligen Kettenräder an dem an der einen Seite oder der anderen Seite des Kettengliedes 6 ausgebildeten Verstärkungsabschnitt bzw. Versteifungselement 12 angreifen. Weder der im Grundkörper 10 ausgebildeten Aufnahmeköcher noch der Grundkörper 10 muss spanend bearbeitet werden, was geringe Fertigungskosten ergibt.

Jeweils zwei aufeinanderfolgende Kettenglieder 6 sind durch je ein Gelenk 15 verschwenkbar miteinander verbunden, dessen Drehachse in der Längs-Mittelebene des jeweiligen Kettengliedes verläuft. Jedes Gelenk 15 besteht aus zwei an einer Frontseite an den Grundkörper 10 mit vorgegebenem Zwischenabstand angeformten Augen 16, 17, einem ebenfalls an dem Grundkörper 10 an der Rückseite angeformten mittleren Gelenkauge 18 und aus einem auch als Steckachse bezeichneten Gelenkbolzen 19, an dem endseitig Sicherungsscheiben 20 befestigt werden. Dieser Bolzen 19 durchragt die ausgefluchteten Öffnungen der beiden vorderen Augen 16, 17 sowie des mittleren rückwärtigen Auges 18 des benachbarten Kettengliedes. Wie aus Fig. 3 ersichtlich, sind in die Bohrung des mittleren rückwärtigen Auges 18 zwei endseitige versteifende Lagerbuchsen 21 eingesetzt.

Bei dem dargestellten Ausführungsbeispiel hat das angeformte rückwärtige Lagerauge 18 eine sich in Richtung der Kettenglied-Mittelachse allmählich verbreiternde Querschnittsform und ist in seinem oberen Teil durch drei angeformte, im wesentlichen in Bewegungsrichtung sich erstreckende Längstege 22 mit dem Grundkörper 10 des Kettenglieds 6 verbunden. Diese Stege 22 gehen in die Wandung einer vertikalen Öffnung 24 über. An der diametral gegenüberliegenden Seite dieser Öffnung 24 sind ebenfalls drei sich in Bewegungsrichtung erstreckende Stege 25 angeformt, die in die Umfangswandung des oberen Gelenkauges 16 übergehen, wie dies in Fig. 3 gezeigt ist. Diese in Bewegungsrichtung des Kettenmagazins 1 ausgerichteten Stege 22 und 25 erhöhen die Formsteifigkeit und Belastungsfähigkeit der Kettenglieder.

Auf der Oberseite der oberen frontseitigen Gelenkaugen 16 ist ein Hohlzapfen 27 angeformt, auf dem ein Laufrad 28 als Führungselement um die Achse des Gelenkbolzens 19 verdrehbar gelagert ist. Da die vorderen und hinteren Gelenkbolzen 19 jedes Kettenglieds 6 in der mittigen Längsebene des Kettenglieds 6 liegen, sind auch die vorderen und hinteren Laufrollen 28 mit ihren Drehachsen in dieser Längsebene angeordnet, wodurch eine konstruktive und funktionale Symmetrie erreicht wird.

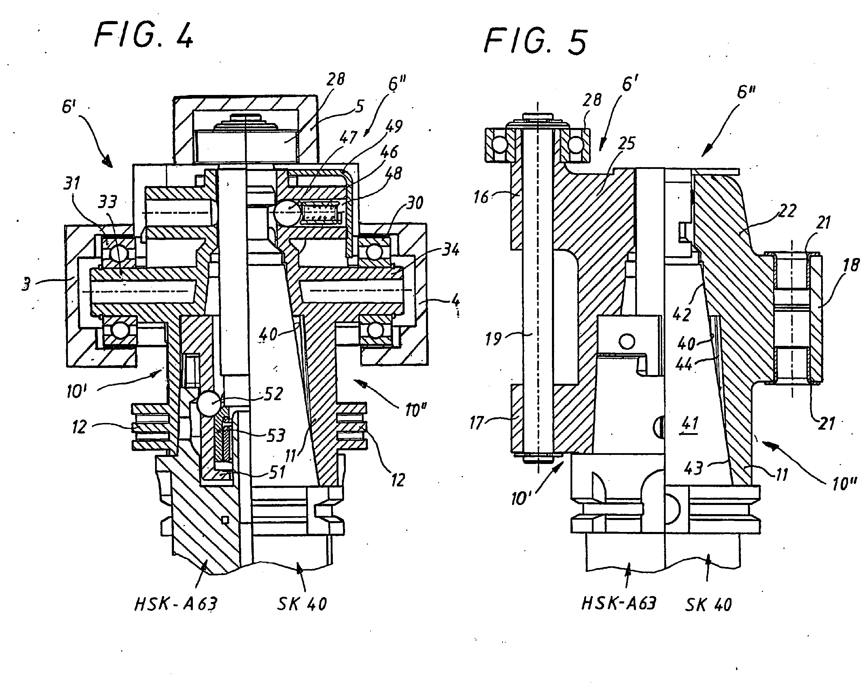

Als Seitenführungselemente dienen bei der erfindungsgemäßen Magazinkette 1 seitliche Laufrollenpaare 30, 31, die im rechten Teil der Fig. 3 sowie in Fig. 4 im Einzelnen dargestellt sind. Wie insbesondere aus Fig. 4 ersichtlich, weisen die Grundkörper 10 der Kettenglieder 6 zwei seitliche diametral gegenüberliegende Hohlzapfen 33, 34 auf, auf deren jeweiligen Endteilen eine Laufrolle 30, 31 als Führungselement gelagert ist. Wie aus Fig. 4 ersichtlich, laufen diese Laufrollen 30, 31 in den hier mit U-förmigem Querschnitt ausgebildeten Führungsschienen 3, 4.

In den Figuren 4, 5 sind jeweils zwei verschiedene Ausführungen eines Kettengliedes 6', 6" für die erfindungsgemäße Magazinkette dargestellt. Die in der jeweiligen rechten Hälfte der Figuren 4 und 5 dargestellte Ausführung 6" ist für den Einsatz von Werkzeugaufnahmen vom Typ SK 40 und die in der linken Hälfte dieser Figuren dargestellte Ausführung 6' ist für den Einsatz von Werkzeugaufnahmen vom Typ HSK-A63 konzipiert. Dementsprechend weist der Grundkörper 10" des jeweils rechtsseitigen Kettengliedes 6" einen sich in vertikaler Richtung nach oben im Durchmesser vermindernden Innenraum 40 auf, in dem ein Werkzeugkegel 41 aufgenommen ist, der an einer oberen und an einer unteren Ringfläche 42, 43 spielfrei gehalten ist. Im Innenraum 40 können weitere Schrägstreben 44 angeformt sein, an deren schräger Innenfläche der Werkzeugkegel 41 ebenfalls anliegt. Zur Sicherung des Werkzeugkegels dient ein Kugelgesperre, das in Fig. 4 dargestellt ist und aus einer Druckfeder 46 sowie einer von dieser nach radial innen beaufschlagten Kugel 47 besteht, die in einer Querbohrung 48 im oberen Teil des Klemmgliedes angeordnet und durch eine Federkappe 49 gegen Herausfallen gesichert sind.

Das in dem jeweiligen linken Teil der Figuren 4 und 5 dargestellte Kettenglied 6' hat einen verkürzten unteren Endteil, d.h., es endet unmittelbar unterhalb der ringsegmentförmigen Versteifungselemente 12. Zur Fixierung einer eingeführten Werkzeugaufnahme HSK-A63 dient eine Spannbuchse 51 mit einer Kugel 52 und einer Federsicherung 53. Dieser Sicherungsmechanismus ist bei den angegebenen Werkzeugaufnahmen bekannt. Auch bei den in den Figuren 4 und 5 dargestellten Ausführungen bestehen die Kettenglieder 6', 6" mit den die Aufnahmeköcher enthaltenden Grundkörpern 10', 10" aus Leichtmetallguss oder formfestem Kunststoff, was ein geringes Gesamtgewicht der Magazinkette ergibt. Da die Grundkörper 10', 10" und damit die Funktionsflächen der Aufnahmeköcher nicht spanend bearbeitet werden müssen, sind auch diese Ausführungen kostengünstig herzustellen und geräuscharm im Betrieb.

Die Erfindung ist nicht auf die dargestellten Ausführungsbeispiele beschränkt. Obgleich die Grundkörper der Kettenglieder vorzugsweise als leichtgewichtige Guss- bzw. Formteile einstückig ausgebildet sein sollten, ist auch eine mehrteilige Bauweise möglich, bei welcher die einzelnen Bauteile durch geeignete Verbindungssysteme, wie Löten, Schweißen, Kleben, dauerhaft und fest miteinander verbunden sind.

## Patentansprüche

1. Werkzeug-Kettenmagazin, insbesondere für programmgesteuerte Fräsmaschinen und Bearbeitungszentren, mit
- einer stationären Tragkonstruktion, an der Linearführungen (3-5), Kettenräder (2) und ein Antriebsaggregat als Drehantrieb für mindestens eines der Kettenräder (2) montiert sind,
- einer endlosen Magazinkette (1), die aus einer Reihe von gelenkig miteinander verbundenen Kettengliedern (6) besteht,
- wobei jedes Kettenglied (6) durch Führungselemente (28, 30, 31) an den Linearführungen (3-5) gehalten und geführt ist,
- wobei jedes Kettenglied (6) je einen Aufnahmeköcher zur Aufnahme und Halterung eines Werkzeugs aufweist, und
- die vorderen und hinteren Verbindungsgelenke (16-19) der Kettenglieder (6) in der zentralen Längsachse der Magazinkette (1) angeordnet sind
- die Kettenglieder (6) der Magazinkette (1) von den darin mittig angeordneten Aufnahmeköchern gebildet sind, **dadurch gekennzeichnet, dass**
- die Kettenglieder (6) Grundkörper (10) aus einem formstabilen und verschleißfesten Leichtmetall oder Kunststoff aufweisen, welche die Aufnahmeköcher bilden, und
- jedes Kettenglied (6) mindestens einen Verstärkungsabschnitt (12) hat, an dem die Kettenräder (2) angreifen, wobei
- an einer Stirnseite des Kettenglieds (6) zwei Gelenkaugen (16, 17) mit Zwischenabstand angeformt sind und an der diametral gegenüberliegenden anderen Stirnseite des Kettenglieds (6) ein mittleres Gelenkauge (18) angeformt ist, dessen Länge geringfügig kleiner als der axiale Abstand zwischen den beiden Gelenkaugen (16, 17) an der ersten Stirnseite ist.

2. Kettenmagazin nach Anspruch 1,
**dadurch gekennzeichnet, dass**
jedes Kettenglied (6) zwei seitlich diametral angeordnete Führungs- und Tragrollen (30, 31) aufweist, die in zwei zueinander parallelen Führungs- und Tragschienen (3, 4) der Tragkonstruktion laufen.

3. Kettenmagazin nach Anspruch 2,
**dadurch gekennzeichnet, dass**
die Führungs- und Tragrollen (30, 31) auf Hohlzapfen (33, 34) gelagert sind, die an dem Formkörper (10) des jeweiligen Kettengliedes (6) seitlich angeformt sind.

4. Kettenmagazin nach einem der vorstehenden Ansprüche,
**dadurch gekennzeichnet, dass**
aufeinanderfolgende Kettenglieder (6) durch einen Gelenkbolzen (19) gegeneinander verschwenkbar verbunden sind, wobei die Bolzenachsen in der Mittelebene des Kettenglieds (6) verlaufen.

5. Kettenmagazin nach Anspruch 4,
**dadurch gekennzeichnet, dass**
Führungsrollen (28) auf den oberen Endteilen der Gelenkbolzen (19) gelagert sind, die in einer Führungsschiene (5) der Tragkonstruktion laufen.

6. Kettenmagazin nach einem der vorstehenden Ansprüche,
**dadurch gekennzeichnet, dass**
jedes Kettenglied (6) in seinem oberen Teil äußere Verstärkungsstreben (22, 25) aufweist, die sich in Kettenlaufrichtung erstrekken.

7. Kettenmagazin nach einem der vorstehenden Ansprüche,
**dadurch gekennzeichnet, dass**
im oberen Teil des Formkörpers (10) des Kettenglieds (6) eine Querbohrung (48) ausgebildet ist, in der eine Fixierkugel (47) und eine Druckfeder (46) zur Fixierung eines in den Köcher eingesetzten Werkzeugkegels angeordnet sind.

8. Kettenmagazin nach Anspruch 7,
**dadurch gekennzeichnet, dass**
auf dem oberen Endteil des Formkörpers (10) des Kettenglieds (6) eine Federkappe (49) zur Sicherung der Druckfeder (46) aufgeklemmt ist.

9. Kettenmagazin nach einem der vorstehenden Ansprüche,
**dadurch gekennzeichnet, dass**
die Formkörper (10) mit den Aufnahmeköchern für die Werkzeuge unter Verzicht auf spanende Bearbeitung lediglich durch die Verbindungsgelenke (15) aus angeformten Gelenkaugen (16, 17, 18) und Gelenkbolzen (19) direkt zur Magazinkette (1) verbunden sind.

## Claims

1. A chain magazine for tools, in particular for program controlled milling machines and machining centers, comprising
- a stationary supporting structure on which linear guides (3-5), sprockets (2) and a drive unit as a rotary drive for at least one of the sprockets (2) are mounted,
- an endless magazine chain (1) which consists of a number of hingedly connected chain links (6),
- wherein each chain link (6) is held at and guided along the linear guides (3-5) by guide elements (28, 30, 31),
- wherein each chain link (6) has one receptacle for receiving and holding a tool, and
- the front and rear link hinges (16-19) of the chain links (6) are arranged in the central longitudinal axis of the magazine chain (1),
- the chain links (6) of the magazine chain (1) are formed by the receptacles arranged centrally therein,
**characterized in that**
- the chain links (6) include base bodies (10) made of a dimensionally stable and wear resistant light metal or plastic material, which form the receptacles, and
- each chain link (6) has at least one reinforcing portion (12) with which the sprockets (2) mesh, wherein
- two hinged lugs (16, 17) are formed on a front side of the chain link (6) at an intermediate distance and a central lug (18) is formed on the diametrically opposed other front side of the chain link (6), the length of said lug being slightly shorter than the axial distance between the two hinged lugs (16, 17) on the first front side.

2. The chain magazine according to claim 1,
**characterized in that**
each chain link (6) has two laterally diametrically arranged guide and support rollers (30, 31) which run in two parallel guiding and supporting rails (3, 4) of the support structure.

3. The chain magazine according to claim 2,
**characterized in that**
the guiding and supporting rollers (30, 31) are supported on hollow pins (33, 34) which are formed laterally on the molded body (10) of the respective chain link (6).

4. The chain magazine according to any of the preceding claims,
**characterized in that**
successive chain links (6) are connected so as to swivel against each other by a pivot bolt (19), wherein the bolt axes run in the center plane of the chain link (6).

5. The chain magazine according to claim 4,
**characterized in that**
guiding rollers (28) are supported on the upper end parts of the pivot bolts (19) which run in a guiding rail (5) of the support structure.

6. The chain magazine according to any of the preceding claims,
**characterized in that**
each chain link (6) has outer reinforcing struts (22, 25) in the upper part thereof, said struts expending in the chain running direction.

7. The chain magazine according to any of the preceding claims,
**characterized in that**
a cross-hole (48) is formed in the upper part of the molded body (10) of the chain link (6), said bore accommodating a fixing ball (47) and a compression spring (46) for fixing a tool cone inserted in the receptacle.

8. The chain magazine according to claim 7,
**characterized in that**
a spring cap (49) for securing the compression spring (46) is clamped on the upper end portion of the molded body (10) of the chain link (6).

9. The chain magazine according to any of the preceding claims,
**characterized in that**
the molded bodies (10) including the receptacles for the tools are connected directly to the magazine chain (1), without the use of machining, merely by the joining hinges (15) of molded-on hinge lugs (16, 17, 18) and pivot bolts (19).

## Revendications

1. Magasin à outil du type à chaîne sans fin pour machines à fraiser et centre d'usinage commandés par programme, avec
- une structure porteuse fixe sur laquelle sont montés des rails de guidage linéaires (3-5), des roues à chaîne (2) et un groupe d'entraînement faisant office d'entraînement rotatif pour au moins une roue à chaîne,
- une chaîne de magasin sans fin (1) composée d'une série de maillons (6) articulés et assemblés les uns aux autres,
- chaque maillon (6) étant maintenu et guidé sur les rails de guidage (3-5) par des éléments de guidage (28, 30, 31),
- chaque maillon (6) présentant un réceptacle permettant de loger et de maintenir un outil, et
- les liaisons articulées (16-19) avant et arrière des maillons (6) sont disposées sur l'axe longitudinal central de la chaîne de magasin (1),
- les maillons (6) de la chaîne de magasin (1) sont formés par les réceptacles placés en leur milieu,
**caractérisé en ce que**
- les maillons (6) présentent des corps de base (10) en métal léger ou en plastique indéformables et résistants à l'usure, qui constituent les réceptacles, et
- chaque maillon (6) a au moins une partie renforcée (12) sur laquelle s'engager les roues à chaîne (2),
- deux oeillets d'articulation (16, 17) espacés l'un de l'autre étant formés sur la face avant du maillon (6), et un oeillet d'articulation intermédiaire (18) étant formé sur la face avant diamétralement opposée de la chaîne, dont la longueur est légèrement inférieure à l'écartement axial des deux oeillets d'articulation (16, 17) de la première face avant.

2. Magasin du type à chaîne sans fin selon la revendication 1,
**caractérisé en ce que**
chaque maillon (6) présente deux rouleaux de guidage et de support (30, 31) latéraux diamétralement opposés qui se déplacent sur deux rails de guidage et de support parallèles (3, 4) de la structure porteuse.

3. Magasin du type à chaîne sans fin selon la revendication 2
**caractérisé en ce que**
les rouleaux de guidage et de support (30, 31) sont montés sur des tenons creux (33, 34) formés latéralement sur le corps moulé (10) du maillon correspondant (6).

4. Magasin du type à chaîne sans fin selon l'une quelconque des revendications précédentes,
**caractérisé en ce que**
les maillons (6) successifs sont assemblés les uns aux autres de manière à pouvoir pivoter les uns par rapport aux autres grâce à un boulon d'articulation (19), les axes des boulons se trouvant sur le plan médian du maillon (6).

5. Magasin du type à chaîne sans fin selon la revendication 4,
**caractérisé en ce que**
les rouleaux de guidage (28) sont montés sur les extrémités supérieures des boulons d'articulation (19) qui se déplacent dans un rail de guidage (5) de la structure porteuse.

6. Magasin du type à chaîne sans fin selon l'une quelconque des revendications précédentes,
**caractérisé en ce que**
chaque maillon (6) présente dans sa partie supérieure des renforcements extérieurs (22, 25) qui s'étendent dans le sens de l'avance de la chaîne.

7. Magasin du type à chaîne sans fin selon l'une quelconque des revendications précédentes,
**caractérisé en ce que**,
la partie supérieure du corps moulé (10) du maillon (6) présente un perçage transversal (48) dans lequel se trouvent une bille de fixation (47) et un ressort de compression (46) destinés à fixer un cône d'outil inséré dans le réceptacle.

8. Magasin du type à chaîne sans fin selon la revendication 7,
**caractérisé en ce que**
l'extrémité supérieure du corps moulé (10) du maillon (6) serre un capuchon de ressort (49) destiné sécuriser le ressort de compression (46).

9. Magasin du type à chaîne sans fin selon l'une quelconque des revendications précédentes,
**caractérisé en ce que**
les corps moulés (10) comportant les réceptacles à outils, en renonçant à un usinage avec formation de copeaux, sont assemblés directement en chaîne de magasin (1) uniquement par le biais des liaisons articulées (15) constituées des oeillets d'articulation formés (16, 17, 18) et des boulons d'articulation (19).
